(19) **Europäisches Patentamt**
**European Patent Office**
**Office européen des brevets**

(11) **EP 4 383 024 B1**

(12) **EUROPÄISCHE PATENTSCHRIFT**

(45) Veröffentlichungstag und Bekanntmachung des Hinweises auf die Patenterteilung:
**29.07.2026 Patentblatt 2026/31**

(21) Anmeldenummer: **23212877.7**

(22) Anmeldetag: **29.11.2023**

(51) Internationale Patentklassifikation (IPC):
**G05B 19/042** (2006.01)     **G05B 19/418** (2006.01)
**G06Q 50/04** (2012.01)     **G06N 20/10** (2019.01)

(52) Gemeinsame Patentklassifikation (CPC):
**G05B 19/042; G05B 19/418; G06N 20/10;**
**G06Q 50/04;** G05B 2219/32015; G05B 2219/45193;
G05B 2219/45196

(54) **VERFAHREN ZUR COMPUTERGESTÜTZTEN ANPASSUNG EINER KONFIGURATION FÜR UNTERSCHIEDLICHE TEXTILE PRODUKTIONEN**

METHOD FOR COMPUTER-ASSISTED ADJUSTMENT OF A CONFIGURATION FOR DIFFERENT TEXTILE PRODUCTIONS

PROCÉDÉ D'ADAPTATION ASSISTÉE PAR ORDINATEUR D'UNE CONFIGURATION POUR DIFFÉRENTES PRODUCTIONS TEXTILES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **07.12.2022 LU 503150**

(43) Veröffentlichungstag der Anmeldung:
**12.06.2024 Patentblatt 2024/24**

(73) Patentinhaber: **Saurer Spinning Solutions GmbH & Co. KG**
**52531 Übach-Palenberg (DE)**

(72) Erfinder: **Schmitz, Johannes**
**52531 Übach-Palenberg (DE)**

(74) Vertreter: **Morgenthum-Neurode, Mirko**
**Saurer Spinning Solutions GmbH & Co. KG**
**Patentabteilung**
**Carlstraße 60**
**52531 Übach-Palenberg (DE)**

(56) Entgegenhaltungen:
DE-A1- 102006 014 475     IT-A1- 201900 009 465
US-A1- 2017 277 164     US-B1- 6 263 257

**Beschreibung**

Die vorliegende Erfindung betrifft ein Verfahren zur computergestützten Anpassung einer Konfiguration für unterschiedliche textile Produktionen. Ferner bezieht sich die Erfindung auf eine Vorrichtung, ein System sowie ein Computerprogramm zu diesem Zweck.

Aus dem Stand der Technik ist es bekannt, dass bei textilen Produktionen eine Vielzahl von Maschinen eingesetzt werden, welche zur Verarbeitung eines textilen Materials konfiguriert werden müssen. Dabei hängen die Eigenschaften der Ergebnisse dieser Produktionen von einer Vielzahl von Faktoren ab. Dies hat zur Folge, dass nicht eine einzige Konfiguration gefunden werden kann, welche für verschiedenen Produktionen die gleiche Produktionsqualität bietet. Faktoren wie Abnutzung von Hardware, Raumklima, Fasermischungen und Qualität sind bei jeder Produktion anders, sodass eine gleichbleibende Konfiguration zu unterschiedlichen Produktionsergebnissen führen kann.

Es ist daher auch bekannt, dass die Konfigurationen für die Produktionen manuell ermittelt und in die entsprechende Maschine eingetragen werden. Dies ist allerdings zeitaufwendig und der Grad der Optimierung der jeweiligen Konfiguration hängt ggf. sehr von der Erfahrung des Bedieners ab, welcher die Konfiguration vornimmt.

In der Schrift DE 10 2006 014 475 A1 ist beschrieben, dass eine Konfiguration in außerbetrieblichen Versuchen gefunden werden kann. Da dies jedoch zur Produktion einer erheblichen Menge Ausschuss führt, wird ein Verfahren vorgeschlagen, bei welchem eine Textilmaschine mittels eines neuronalen Netzes gesteuert wird. Damit soll auch eine Produktion eines Ausschusses vermieden werden. Der Einsatz des Verfahrens ist dabei auf eine Produktion einer Textilmaschine beschränkt.

Weitere gattungsgemäße Verfahren sind aus der WO 2020/100092 A1 und der EP 3 760 772 A1 bekannt.

Ferner offenbart die Schrift IT 2019 0000 9465 A1 ein Verfahren zur Regelung eines Betriebsparameters einer industriellen Maschine, zum Beispiel einer Textilmaschine, um deren Betriebszustand zu ändern.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Lösung zur Anpassung der Konfiguration für verschiedene Produktionen vorzuschlagen.

Die voranstehende Aufgabe wird gelöst durch ein Verfahren, eine Vorrichtung, ein System sowie durch ein Computerprogramm mit den Merkmalen der entsprechenden unabhängigen Ansprüche. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung, dem erfindungsgemäßen System sowie dem erfindungsgemäßen Computerprogramm und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zur computergestützten Anpassung einer Konfiguration für unterschiedliche textile Produktionen, bei welchen jeweils in mindestens einem Produktionsschritt basierend auf einer Produktionsvorgabe ein textiles Material, wie Fasern, durch wenigstens eine Maschine verarbeitet wird, vorzugsweise zur Herstellung eines textilen Produktes wie eines Fadens. Das Verfahren kann als ein computerimplementiertes Verfahren ausgeführt sein oder auch nur teilweise durch einen Computer ausgeführt werden. Letzteres kann bedeuten, dass auch Verfahrensschritte vorgesehen sind, welche durch die zumindest eine Maschine ausgeführt werden.

Es kann ferner vorgesehen sein, dass die Produktionsvorgabe für die unterschiedlichen Produktionen variiert wird. Die Produktionsvorgabe ist bspw. eine Festlegung des textilen Produktes, also des Produktionsergebnisses der jeweiligen Produktion. Die Produktionsvorgabe kann für die unterschiedlichen Produktionen variieren, wobei die Produktionen dennoch mit der gleichen Maschine bzw. den gleichen Maschinen durchgeführt werden. Dabei ist es möglich, dass bei den Produktionen in Abhängigkeit von der Produktionsvorgabe das textile Material variiert und/oder die wenigstens eine Maschine unterschiedlich betrieben wird. Auch ist es denkbar, dass sich Umgebungsfaktoren bei der Produktion verändern. Die Produktionsvorgabe kann außerdem auch eine Zusammensetzung des textilen Materials definieren, z. B. eine Fasermischung.

Das Verfahren umfasst die nachfolgenden Schritte, vorzugsweise zur automatisierten Produktionsvorbereitung der jeweiligen textilen Produktion mit der dafür variierten Produktionsvorgabe, wobei die Schritte vorzugsweise nacheinander in der angegebenen Reihenfolge und/oder wiederholt ausgeführt werden:

- Initiieren einer Durchführung von wenigstens einem oder mehreren Produktionsexperimenten, wobei bei dem jeweiligen Produktionsexperiment der mindestens eine Produktionsschritt mit einer Einstellung konfiguriert und basierend auf der Produktionsvorgabe durchgeführt wird,
- Ermitteln einer Auswirkung der auf der Einstellung basierenden Konfiguration bei dem jeweiligen Produktionsexperiment,
- Anpassen der Einstellung auf Basis der ermittelten Auswirkung, um eine auf die Produktionsvorgabe optimierte Einstellung zu bestimmen.

Es kann vorgesehen sein, dass nach der Durchführung eines ersten der mehreren Produktionsexperimente das Anpassen der Einstellung für jedes der weiteren Produktionsexperimente durchgeführt wird. Somit wird der mindestens eine Produktionsschritt bei den jeweiligen weiteren Produktionsexperimenten mit der jeweils dafür angepassten Einstellung konfiguriert. Erst nach der Durchführung des letzten Produktionsexperiments kann somit die zuletzt angepasste Einstellung als die optimierte Einstellung bestimmt werden. Dies wird nachfolgend beispielhaft für mindestens drei Produktionsexperimente beschrieben, wobei die nachfolgenden Schritte nacheinander in der angegebenen Reihenfolge ausgeführt werden:

- Zunächst wird die Durchführung von einem ersten der mehreren Produktionsexperimente initiiert, bei welchem der mindestens eine Produktionsschritt mit einer initialen, ggf. vordefinierten Einstellung konfiguriert und basierend auf der Produktionsvorgabe durchgeführt wird,
- Anschließend wird eine Auswirkung der auf der initialen Einstellung basierenden Konfiguration bei dem ersten Produktionsexperiment ermittelt,
- Es wird dann die initiale Einstellung auf Basis der ermittelten Auswirkung angepasst,
- Sodann wird die Durchführung von einem zweiten der mehreren Produktionsexperimente initiiert, bei welchem der mindestens eine Produktionsschritt mit der zuvor angepassten Einstellung konfiguriert und basierend auf der Produktionsvorgabe durchgeführt wird,
- Anschließend wird eine Auswirkung der auf der zuvor angepassten Einstellung basierenden Konfiguration bei dem zweiten Produktionsexperiment ermittelt,
- Es wird dann die Einstellung auf Basis der ermittelten Auswirkung erneut angepasst,
- Sodann wird die Durchführung von einem letzten der mehreren Produktionsexperimente initiiert, bei welchem der mindestens eine Produktionsschritt mit der zuvor erneut angepassten Einstellung konfiguriert und basierend auf der Produktionsvorgabe durchgeführt wird,
- Anschließend wird eine Auswirkung der auf der zuvor erneut angepassten Einstellung basierenden Konfiguration bei dem letzten Produktionsexperiment ermittelt,
- Es wird dann die Einstellung auf Basis der ermittelten Auswirkung nochmals angepasst,
- Die nochmals angepasste Einstellung wird als die optimierte Einstellung bestimmt.

Ferner kann das Verfahren den nachfolgenden Schritt, vorzugsweise zur (automatisierten) Produktionsinitiierung der jeweiligen textilen Produktion mit der dafür variierten Produktionsvorgabe, umfassen, welcher bevorzugt durchgeführt wird, nachdem die auf die Produktionsvorgabe optimierte Einstellung bestimmt wurde:

- Initiieren einer Durchführung der textilen Produktion, bei welcher der mindestens eine Produktionsschritt mit der optimierten Einstellung konfiguriert und basierend auf der Produktionsvorgabe durchgeführt wird.

Es ist möglich, dass das Initiieren der Durchführung der textilen Produktion den nachfolgenden Schritt umfasst:

- Automatisiertes Durchführen der Konfiguration der wenigstens einen Maschine mit der optimierten Einstellung.

Darüber hinaus kann wenigstens eine Methode des maschinellen Lernens verwendet werden, um auf Basis der ermittelten Auswirkung das Anpassen durchzuführen, wobei vorzugsweise die wenigstens eine Methode des maschinellen Lernens als wenigstens eine Kernel-Methode ausgeführt ist. Dies ermöglicht eine automatische Verbesserung oder Erstellung von Produktionseinstellwerten durch künstliche Intelligenz. Die von der wenigstens einen Methode des maschinellen Lernens jeweils angepasste Einstellung kann anschließend für ein weiteres der Produktionsexperimente zur Konfiguration der wenigstens einen Maschine verwendet werden oder final als die optimierte Einstellung bestimmt werden. Auf diese Weise kann die wenigstens eine Methode des maschinellen Lernens die Produktionsexperimente und final auch die Produktion steuern.

Es ist möglich, dass die Produktionsexperimente vollständig automatisiert initiiert und/oder durchgeführt werden. Entsprechend kann die wenigstens eine Methode des maschinellen Lernens selbstständig die Produktionsexperimente, z. B. Spinnversuche, über die Anpassung der Einstellung steuern. Auch ist es möglich, dass die Auswirkung automatisiert ermittelt wird. Die Auswirkung ist bspw. als wenigstens ein Messergebnis zumindest einer Erfassungsvorrichtung wie eines Sensors ausgeführt. Das Ermitteln der Auswirkung kann bspw. eine Bewertung des Produktionsexperiments und/oder des dabei verarbeiteten textilen Materials und/oder Produktionsergebnisses und/oder anderer Faktoren wie Stromverbrauch umfassen. Da das Produktionsexperiment mit der gleichen wenigstens einen Maschine, also der gleichen Hardware, wie die Produktion durchgeführt werden kann, insbesondere auch mit dem gleichen textilen Material wie einem Faserverbund entsprechend der Produktionsvorgabe und/oder gleichen Umgebungsbedingungen wie einem Klima in der Umgebung der wenigstens einen Maschine, kann die wenigstens eine Methode des maschinellen Lernens die beste Einstellung für die spezifische Produktion ermitteln.

Die wenigstens eine Maschine kann eine Rotorspinnmaschine oder eine Luftspinnmaschine umfassen. Auch ist es möglich, dass die wenigstens eine Maschine nur eine einzige Maschine umfasst, sodass bei der Produktion die Verarbeitung bspw. nur durch die Maschine wie eine Rotorspinnmaschine oder eine Luftspinnmaschine erfolgt.

Es ist möglich, dass die jeweilige Produktion nur zur Produktion einer begrenzten, kleineren Menge anhand der jeweiligen Produktionsvorgabe vorgesehen ist. Somit kann eine häufige Variation der Produktionsvorgabe vorgesehen sein, z. B. nach höchstens einer Woche oder sogar nur wenigen Tagen oder Stunden. Auch ist es möglich, dass nach jeder Variation der Produktionsvorgabe die Schritte zur Produktionsvorbereitung erneut durchgeführt werden. Die jeweilige Produktion kann ferner hinsichtlich der produzierten Menge und/oder Produktionszeit beschränkt sein, so dass die jeweilige Produktion nach Überschreiten einer vorgegebenen Höchstgrenze der Menge und/oder Produktionszeit beendet wird, um die Schritte zur Produktionsvorbereitung erneut durchzuführen. Dies hat den Vorteil, dass bei einer Veränderung der Produktionsvorgabe und/oder von Einflussfaktoren wie einem Alter der wenigstens einen Maschine die Einstellung erneut optimiert wird.

Ferner kann es im Rahmen der Erfindung vorgesehen sein, dass die Einstellung wenigstens einen oder mehrere Einstellwerte für die wenigstens eine Maschine in der Form wenigstens einer Textilmaschine, vorzugsweise Spinn- und/oder Spulmaschine, umfasst, um die Verarbeitung des textilen Materials, vorzugsweise einer Verarbeitung von Fasern zu Garn (auch als Faden bezeichnet) und/oder eines Um- und/oder Aufspulens des Garns, in dem mindestens einen Produktionsschritt zu steuern. Hierzu können der Einstellwert oder die Einstellwerte bspw. über eine Datenverbindung wie ein Netzwerk an eine Maschine übertragen werden, um auf diese Weise die Maschine und damit auch den Produktionsschritt, welcher durch die Maschine durchgeführt wird, zu konfigurieren.

Es ist außerdem denkbar, dass der wenigstens eine oder die mehreren Einstellwerte zumindest einen der folgenden Werte umfassen: eine Abzugsgeschwindigkeit, eine Rotationsgeschwindigkeit eines Rotors der Maschine, einen Unterdruck, eine Spannung des textilen Materials und/oder eines Produktionsergebnisses beim Aufwickeln, eine Art und/oder Auswahl des textilen Materials, eine Aufspulgeschwindigkeit, insbesondere einer Fadenaufspulvorrichtung, eine Einstellung für einen Reiniger, insbesondere eines Grenzwertes für ein Schneiden des textilen Materials durch den Reiniger. Der Reiniger kann vorzugsweise als ein Sensor ausgeführt sein oder einen Sensor umfassen, welcher eine Messung zur Qualitätsprüfung am Garn durchführt. Ferner kann es vorgesehen sein, dass der Reiniger einen Vergleich der gemessenen Werte mit mindestens einem Grenzwert durchführt, um bei einem Über- und/oder Unterschreiten des Grenzwertes eine Grenzwertverletzung festzustellen. Damit ist es möglich, auf Basis des Vergleichs die ausreichende Qualität des Garns festzustellen. Im Falle einer Grenzwertverletzung kann der Reiniger ggf. ein Signal aussenden, um zu initiieren, dass ein fehlerhaftes Stück Garn herausgeschnitten wird.

Es kann optional möglich sein, dass das Ermitteln der Auswirkung als ein Empfangen wenigstens eines Erfassungsergebnisses von wenigstens einer Erfassungsvorrichtung ausgeführt ist. Die Erfassungsvorrichtung kann Teil einer Maschine oder an einer Maschine angeordnet sein. Die Erfassungsvorrichtung kann dazu ausgeführt sein, eine Messgröße zu erfassen, welche durch die Einstellung beeinflusst wird, also eine Auswirkung der Einstellung darstellt. Entsprechend kann das Erfassungsergebnis aus einer Erfassung, insbesondere Messung und/oder Analyse, an der Maschine und/oder am textilen Material und/oder in einer Umgebung der Maschine und/oder an einem Produktionsergebnis, vorzugsweise einem Garn, des jeweiligen Produktionsexperiments resultieren.

Die wenigstens eine Erfassungsvorrichtung kann einen kapazitiven Sensor umfassen, um die Kapazität eines Volumens, in welchem das textile Material und/oder das Produktionsergebnis wie ein Faden hindurchläuft, zu messen. Auf diese Weise kann die hindurchlaufende Menge erfasst werden. Auch kann auf diese Weise abgeleitet werden, ob und/oder in welchem Ausmaße Dünnstellen am Faden auftreten. Alternativ oder zusätzlich kann die wenigstens eine Erfassungsvorrichtung einen optischen Sensor umfassen. Hierbei kann eine Leuchtdiode des Sensors das textile Material und/oder das Produktionsergebnis wie bspw. den Faden anstrahlen und der Sensor ankommendes Licht messen, um bspw. einen Durchmesser des Fadens zu beurteilen. Ebenfalls ist es möglich, dass die wenigstens eine Erfassungsvorrichtung ein Analysegerät umfasst, welches eine detaillierte Analyse des textilen Materials und/oder des Produktionsergebnisses vornimmt. Ferner kann die wenigstens eine Erfassungsvorrichtung zur Durchführung einer Längenmessung und/oder einer Gewichtsmessung ausgeführt sein, um ein Verhältnis zwischen Länge und Gewicht zu ermitteln. Auch kann die wenigstens eine Erfassungsvorrichtung zumindest einen optischen Sensor aufweisen, um Fremdfasern zu ermitteln. Darüber hinaus kann die wenigstens eine Erfassungsvorrichtung zur Erfassung von Produktionsinformationen ausgeführt sein, bspw., wie oft der Faden bei der Herstellung gerissen ist und/oder neu angesponnen werden musste. Auch diese Produktionsinformationen können daher als das wenigstens eine Erfassungsergebnis bereitgestellt werden. Auch ist es denkbar, dass die wenigstens eine Erfassungsvorrichtung zur Ermittlung einer Verdrehung und/oder Zugkraft des Fadens ausgeführt ist.

Vorzugsweise kann vorgesehen sein, dass die mehreren Produktionsexperimente nacheinander durchgeführt werden, wobei für wenigstens eines der Produktionsexperimente das Ermitteln der Auswirkung und anschließend das Anpassen der Einstellung auf Basis der ermittelten Auswirkung durchgeführt wird, um bei einem jeweils nachfolgenden der Produktionsexperimente die Konfiguration mit der hierbei angepassten Einstellung vorzunehmen. Somit können die Produktionsexperimente aufeinander aufbauen und durch den Schritt des Anpassens gesteuert werden. Die Konfiguration kann dabei optional vollautomatisch erfolgen, bspw. durch eine Datenübertragung der Einstellung an die entsprechende Maschine. Auch ist es möglich, dass die notwendigen Daten von der Maschine selbst erhoben werden, um die Konfiguration vorzunehmen.

Beispielsweise kann es vorgesehen sein, dass die mehreren Produktionsexperimente nacheinander durchgeführt werden, wobei bei den Produktionsexperimenten jeweils die Einstellung durch das Anpassen variiert und die dabei ermittelte Auswirkung als Eingabe für die Methode des maschinellen Lernens verwendet wird, um die Einstellung produktionsspezifisch zu optimieren, vorzugsweise anhand wenigstens einer Zielvorgabe. Da bei den mehreren Produktionsexperimenten, welche für eine Produktionsvorbereitung einer jeweiligen Produktion durchgeführt werden, die gleiche Produktionsvorgabe verwendet wird, welche auch für die anschließende jeweilige Produktion genutzt wird, kann hierbei von einer produktionsspezifischen Optimierung gesprochen werden. Die wenigstens eine Zielvorgabe kann ferner ein Optimierungsziel umfassen, welches bspw. vordefiniert ist. Vorteilhafterweise kann die wenigstens eine Zielvorgabe wenigstens eine der folgenden umfassen: eine Maximierung einer Energieeffizienz, vorzugsweise einer Unterdruck- und/oder Überdruckgenerierung bei der Maschine, eine Maximierung einer Qualität des Produktionsergebnisses, insbesondere Garns, eine Maximierung einer Produktionsgeschwindigkeit, eine Minimierung von Reiniger-Schnitten, eine Optimierung der Maschine auf Effizienz, eine Überprüfung von Effekten bei Effektgarn.

Vorzugsweise kann vorgesehen sein, dass die mehreren Produktionsexperimente nacheinander durchgeführt werden, wobei für ein letztes der Produktionsexperimente der Produktionsvorbereitung der jeweiligen Produktion das Ermitteln der Auswirkung und anschließend das Anpassen der Einstellung auf Basis der ermittelten Auswirkung durchgeführt wird, um die hierbei angepasste Einstellung als die optimierte Einstellung zu verwenden. Auf diese Weise kann die Anpassung der Konfiguration abgeschlossen werden.

In einer weiteren Möglichkeit kann vorgesehen sein, dass bei dem jeweiligen Produktionsexperiment und der jeweiligen Produktion das textile Material zur Herstellung eines Produktionsergebnisses, insbesondere eines Garns, verarbeitet wird. Dabei kann das Produktionsergebnis des jeweiligen Produktionsexperiments zumindest teilweise oder vollständig einen Ausschuss bilden und sich dadurch von dem Produktionsergebnis der jeweiligen Produktion unterscheiden. In anderen Worten kann in den Produktionsexperimenten beabsichtigt ein Ausschuss produziert werden, also Produktionsergebnisse wie Garn, welcher verworfen werden muss. Dies kann in Kauf genommen werden, um optimale Einstellungen für die Produktion zu finden. Vorteilhafterweise kann der Ausschuss, d. h. das Produktionsergebnis der Produktionsexperimente, höchstens 1 % oder höchstens 0,1 % des Produktionsergebnisses der Produktion umfassen.

Vorteilhaft ist es zudem, wenn die textilen Produktionen die Verarbeitung mit der gleichen wenigstens einen Maschine durchführen, jedoch sich hinsichtlich der Produktionsvorgabe, vorzugsweise eines Produktionsergebnisses und/oder einer Anforderung an das Produktionsergebnis und/oder einer Parametrisierung und/oder Rezeptur für das Produktionsergebnis und/oder des textiles Materials und/oder eines Parameters des textiles Materials, bevorzugt einer Faseranzahl und/oder Faserstärke und/oder Fasermischung, unterscheiden. Weiter kann jeweils für die Durchführung eines ersten der Produktionsexperimente der Produktionsvorbereitung der jeweiligen Produktion als die Einstellung eine vordefinierte, initiale Einstellung verwendet werden, welche erst nach der Durchführung des ersten Produktionsexperiments variiert wird. Bevorzugt bleibt dabei die jeweils bestimmte optimierte Einstellung der weiteren Produktionen unberücksichtigt. Damit kann die Optimierung beschränkt auf die jeweiligen Produktionen durchgeführt werden. Somit kann gewährleistet werden, dass für auch sehr unterschiedliche Produktionen die Einstellungen optimiert werden können.

Optional ist es denkbar, dass die wenigstens oder genau eine Methode des maschinellen Lernens als eine Kernel-Methode ausgeführt ist, und bevorzugt die Kernel-Methode als eine der nachfolgenden ausgeführt ist: Support Vector Machine, Gaußprozess, Kernel-PCA, Kernel-Perzeptron, kanonische Korrelationsanalyse, Ridge-Regression, spektrale Clusterbildung, lineare adaptive Filter. Die aufgeführten Techniken haben den Vorteil, dass sie eine schnelle und präzise Abschätzung der Fehlerquellen ermöglichen. Insbesondere haben die aufgeführten Techniken und Algorithmen den Vorteil, dass sie auch bei unvollständigen Informationen robust eine Optimierung durchführen können. Dies führt dazu, dass in Summe weniger Iterationen der Experimente durchgeführt werden müssen, um optimale Ergebnisse ermitteln zu können.

Ferner ist es denkbar, dass ein produktionsspezifischer Anteil von Trainingsdaten für das Training der wenigstens einen Methode des maschinellen Lernens vorgesehen ist, welcher ausschließlich aus dem wenigstens einen oder mehreren Produktionsexperimenten der Produktionsvorbereitung der jeweiligen Produktion bestimmt wird, wobei vorzugsweise die Trainingsdaten für die Produktionen gleich definierte initiale Trainingsdaten, insbesondere eine vordefinierte, initiale Einstellung, und zusätzlich auf Basis der ermittelten Auswirkung variierende Trainingsdaten umfasst. Somit kann gewährleistet werden, dass für auch sehr unterschiedliche Produktionen die Einstellungen optimiert werden können.

Des Weiteren ist es im Rahmen der Erfindung optional möglich, dass die wenigstens oder genau eine Methode des maschinellen Lernens als ein Gaußprozess ausgeführt ist. Somit ist es möglich, auch für viele verschiedene Produktionen aufgrund der nur begrenzt verfügbaren Trainingsdaten die Optimierung der Einstellungen vorzunehmen.

Ein weiterer Vorteil kann im Rahmen der Erfindung erzielt werden, wenn die Schritte zur automatisierten Produktionsvorbereitung und/oder Produktionsinitiierung vollautomatisiert durchgeführt werden und/oder das Verfahren zumindest teilweise oder vollständig computerimplementiert ist und vorzugsweise in Echtzeit ausgeführt wird. Dies ermöglicht die Anpassung der Konfiguration auch ohne den Eingriff eines erfahrenen Benutzers.

Zudem ist im Rahmen der Erfindung denkbar, dass bei dem jeweiligen Produktionsexperiment der mindestens eine Produktionsschritt in der Form von mindestens oder genau einem Spinnversuch durchgeführt wird, bei welchem basierend auf der Einstellung ein Faden gesponnen wird, um basierend auf dem Produktionsexperiment durch das Anpassen die Einstellung für die jeweilige Produktion zu optimieren.

Die wenigstens eine Maschine, insbesondere Textilmaschine, umfasst vorteilhafterweise wenigstens eine der folgenden: Spinnmaschine, Textilmaschine für die Faservorbereitung, Textilmaschine für die Spinnereivorbereitung, Ringspinnmaschine, Kompaktspinnmaschine, Rotorspinnmaschine, Luftspinnmaschine, Automationsmaschine, Spulmaschine, Texturiermaschine. Eine Textilmaschine kann zudem eine Vielzahl benachbart zueinander angeordneter Arbeitsstellen aufweisen. Die Arbeitsstellen können z. B. Spinnstellen oder dergleichen sein. Ebenfalls ist eine Ausbildung der Arbeitsstellen als Spulstellen möglich, an denen ein Faden auf eine Spule, bspw. eine Kreuzspule, aufgewickelt wird. So wird bspw. an einer Spinnmaschine aus einem vorgelegten Faserverbund ein Faden hergestellt, der nach Verlassen einer Spinneinheit - in Richtung des Fadenlaufs betrachtet - nacheinander eine Abzugseinrichtung und einen Fadenspeicher passiert und abschließend auf der Fadenaufspulvorrichtung, d.h. der Spulstelle, aufgewickelt wird.

Zur Überwachung der Produktion kann wenigstens eine Erfassungsvorrichtung, z. B. wenigstens ein Sensor, eingesetzt werden. Die Erfassungsvorrichtung kann dabei, z. B. durch eine Erfassung am textilen Material und/oder am Produktionsergebnis an der Textilmaschine und/oder wenigstens einer weiteren für die Produktionsvorbereitung und/oder Produktion eingesetzte Maschine, wenigstens ein Erfassungsergebnis ermitteln. Das wenigstens eine Erfassungsergebnis ist jeweils z. B. als ein Messwert oder dergleichen ausgeführt. Die Erfassung durch die Erfassungsvorrichtung kann dabei wiederholt während der Produktionsvorbereitung und/oder Produktion durchgeführt werden und somit auch als eine Überwachung der Produktionsvorbereitung und/oder Produktion bezeichnet werden. So ist es bspw. bekannt, dass zur Überwachung des Fadenlaufs an den einzelnen Arbeitsstellen einer Textilmaschine, im Bereich des Fadenlaufs, d. h. am Beispiel der Spinnmaschine zwischen der Spinneinheit und der Fadenaufspulvorrichtung, ein sogenannter Fadenwächter angeordnet wird. Der Fadenwächter kann ein mit einer Steuerung der Arbeitsstelle verbundener Fadensensor sein, welcher sowohl ein ungewolltes Reißen des Fadens als auch einen Fehler in dem gesponnenen Faden erkennt. In beiden Fällen kann über eine Steuerung der Arbeitsstelle ein jeweiliger Arbeitsprozess unterbrochen werden. Bei einem schadhaften Faden kann zudem ein Reinigerschnitt durchgeführt werden, bei dem der schadhafte Bereich des Fadens entfernt wird. Bei einem gerissenen Faden kann ein Abschnitt des Fadenendes entfernt werden. In beiden Fällen können anschließend die Fadenenden verbunden werden. An einer Spinnmaschine wird bspw. anschließend das von der Fadenaufspulvorrichtung kommende Fadenende der Spinneinheit zugeführt, in der wieder ein Anspinnvorgang durchgeführt wird, in dessen Folge der Spinnprozess wieder aufgenommen werden kann. Während des Betriebs der wenigstens einen Textilmaschine und/oder wenigstens einen für die Produktionsvorbereitung und/oder Produktion eingesetzten Maschine, d. h. während der Produktion bzw. Produktionsvorbereitung, können das wenigstens eine Erfassungsergebnis durch die wenigstens eine Erfassungsvorrichtung ermittelt werden. Ferner können an den Stellen, an welchen der Anspinnvorgang wieder durchgeführt wird, wiederum Verbindungsstellen entstehen, die ebenfalls Ziel einer Optimierung sein können.

Das wenigstens eine Erfassungsergebnis kann dabei wenigstens eines der folgenden sein: ein physikalischer Parameter und/oder ein chemischer Parameter der wenigstens einen Textilmaschine, wie z. B. eine Drehzahl, eine Leistungsaufnahme, eine chemische Eigenschaft von Schmiermitteln. Darüber hinaus kann das wenigstens eine Erfassungsergebnis wenigstens einen physikalischen Parameter und/oder einen chemischen Parameter des textilen Materials umfassen, wie bspw. eine Dicke, eine Dichte, eine chemische Eigenschaft der Fasern und dergleichen. Die Erfassung von Parametern von Textilmaschinen und/oder textilem Material kann die Entnahme von Proben von den Textilmaschinen und/oder des textilen Materials und die Untersuchung der Proben in Labors umfassen, insbesondere zur Bestimmung der mechanischen/physikalischen und/oder chemischen Eigenschaften der Proben.

Die Produktionsvorbereitung kann einen Teil oder dieselbe Produktionslinie und/oder dieselbe wenigstens eine Textilmaschine verwenden wie die Produktion. Daher gelten Merkmale, die im Zusammenhang mit der Produktion beschrieben sind, auch im Zusammenhang mit der Produktionsvorbereitung. Die Produktion, und somit auch die Produktionsvorbereitung, kann ein oder mehrere Produktionsschritte umfassen. Insbesondere bei der Verarbeitung von Fasern wie Natur- und Chemiefasern und deren Mischungen zu Garnen können die Produktionsschritte wenigstens einen der folgenden umfassen: Umwandeln der Fasern in Kardenbänder, Strecken, Spinnen, automatisches Transportieren von einer vorhergehenden Textilmaschine zu einer nachfolgenden Textilmaschine, Umspulen, Texturieren, Aufspulen. Um eine gewünschte Produktionskapazität entlang einer seriellen Produktionslinie der Produktion zu erreichen, können Textilmaschinen oder Komponenten von Textilmaschinen parallel angeordnet sein. So kann auf einen vorangegangenen Produktionsschritt seriell ein nächster Produktionsschritt folgen, wobei der vorangegangene Produktionsschritt weniger oder mehr parallele Textilmaschinen oder Komponenten zur Verarbeitung von textilem Material erfordern kann als der nächste Produktionsschritt. Beispielsweise kann der Schritt der Faseraufbereitung, der Bänder liefert, weniger parallele Textilmaschinen oder Komponenten erfordern als der Schritt des Spinnens von Bändern zu Garnen.

Es ist möglich, dass das wenigstens eine Erfassungsergebnis zumindest eines der folgenden umfasst: eine Leistungsaufnahme der Maschine, eine Qualität eines Schmiermittels, einen Durchmesser des textilen Materials, eine Faserdichte des textilen Materials, ein Ergebnis einer Laboranalyse des textilen Materials, Faserfeuchtigkeit, Micronaire, Faserlänge, Fadenlauf, Fadenfehler, Faserlängengleichmäßigkeit, Faserfestigkeit, Fasernoppen, Faserreife, Faserfarbe, Faserabfall, Band-/Rovinganzahl/Strang, Band-/Rovinggewichtsabweichung, Band-/Rovinggleichmäßigkeit, dicke Stellen, dünne Stellen, Drehungsgrad, Garnfestigkeit, Garndehnungseigenschaften, Festigkeit, Drehung und Anzahl, Garnhaarigkeit, Garnabriebfestigkeit, Verschleißeigenschaften, Garnfarbe, Umgebungsparameter der Maschine, insbesondere hinsichtlich der klimatischen Bedingungen, eine Häufigkeit eines Reißens und/oder eines Fadenfehlers des textilen Materials und/oder Produktionsergebnisses, insbesondere Fadens, und andere. Das Erfassungsergebnis kann z. B. durch die Entnahme von Proben von Schmiermitteln erfasst werden, um die Qualität des Schmiermittels zu bestimmen. Ebenso kann das Erfassungsergebnis von Textilmaschinen und/oder textilem Material auf externen Informationsgebern basieren, wie z. B. Qualitätsdaten eines Lieferanten von textilem Material (z. B. Qualitätsinformationen von Rohbaumwolle), Typenbezeichnung/Produktnummer und/oder Materialeigenschaften und/oder Verfallsdatum von Verbrauchsmaterialien, wie Schmierstoffen. Auch können als Erfassungsergebnis Umgebungsparameter, insbesondere zu den klimatischen Bedingungen, z. B. Temperatur, Luftfeuchtigkeit, Sonneneinstrahlung, Sonnenstand, vorzugsweise gemessen oder basierend auf externen Informationsquellen und/oder Datum und/oder Uhrzeit, vorgesehen sein. Es kann sich hierbei um die klimatischen Bedingungen in einem Rohmateriallager und/oder einem Lager für Zwischenprodukte und/oder einem Lager für die fertig gestellten Produkte handeln. So können beispielsweise auch Parameter für klimatische Bedingungen in mindestens einem Bereich einer Spinnerei erfasst werden.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind. Die Vorrichtung kann Teil zumindest oder genau einer der wenigstens einen Maschine sein.

Ebenfalls Gegenstand der Erfindung ist ein System zur Durchführung von textilen Produktionen, umfassend:

- wenigstens eine Maschine zur Verarbeitung eines textilen Materials in mindestens einem Produktionsschritt,
- die erfindungsgemäße Vorrichtung zur Datenverarbeitung,
- wenigstens eine Erfassungsvorrichtung zum Ermitteln der Auswirkung durch eine Erfassung wenigstens eines Erfassungsergebnisses an der Maschine und/oder am textilen Material und/oder in einer Umgebung der Maschine und/oder an einem Produktionsergebnis.

Damit bringt das erfindungsgemäße System die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann. Ferner kann das Computerprogramm auch direkt in einer Maschinensoftware der Maschine integriert sein.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

Fig. 1    schematisch ein Ausführungsbeispiel des erfindungsgemäßen Verfahrens,

Fig. 2    schematisch ein Ausführungsbeispiel für ein erfindungsgemäßes System und eine erfindungsgemäße Vorrichtung sowie ein erfindungsgemäßes Computerprogramm.

In den nachfolgenden Figuren werden für die gleichen technischen Merkmale auch von unterschiedlichen Ausführungsbeispielen die identischen Bezugszeichen verwendet.

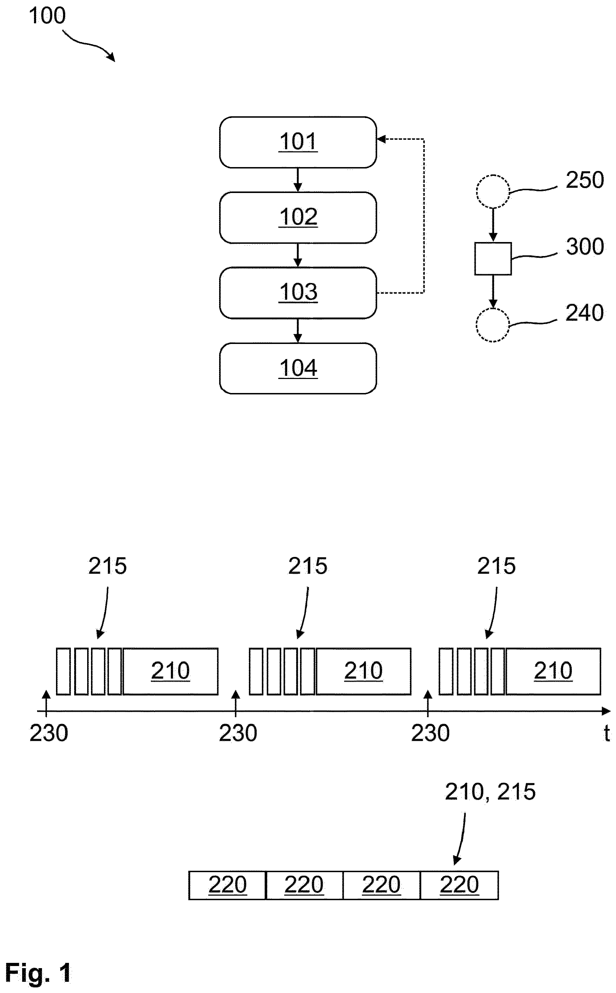

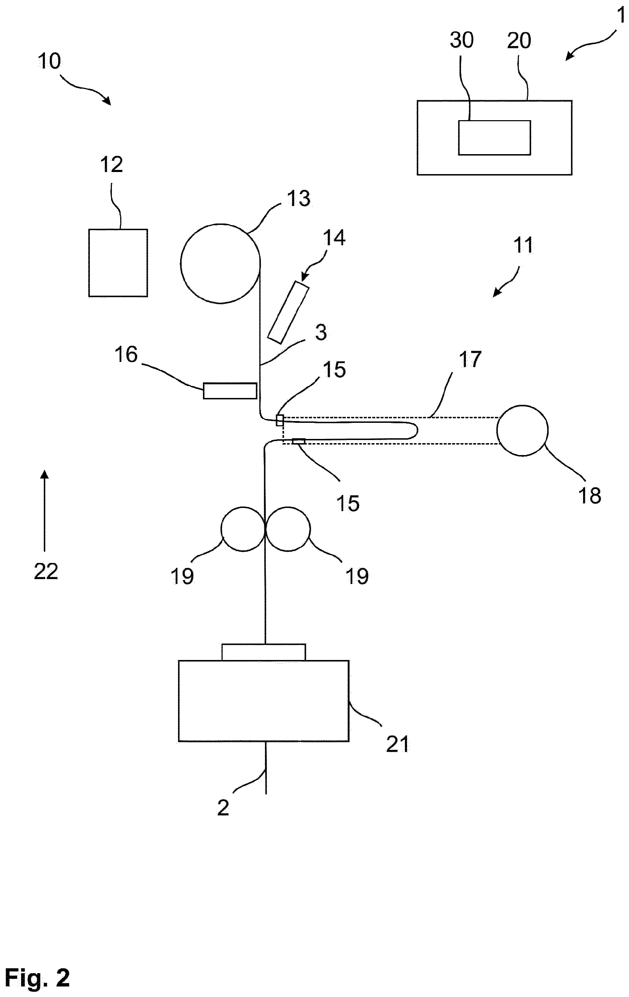

In Fig. 1 ist ein Ausführungsbeispiel für ein erfindungsgemäßes Verfahren 100 zur computergestützten Anpassung einer Konfiguration für unterschiedliche textile Produktionen 210 dargestellt. Es ist beispielhaft anhand eines Zeitstrahls t gezeigt, dass mehrere Produktionen 210 nacheinander durchgeführt werden können, wobei eine Produktionsvorgabe 230 für die unterschiedlichen Produktionen 210 variiert wird (beispielhafte variierte Produktionsvorgaben 230 sind schematisch am Zeitstrahl t durch einen Pfeil dargestellt). Ferner wird bei den Produktionen 210 jeweils in mindestens einem Produktionsschritt 220 basierend auf der Produktionsvorgabe 230 ein textiles Material, wie z. B. Fasern, durch wenigstens eine Maschine 10 zur Herstellung eines textilen Produktes, wie eines Fadens, verarbeitet. Die Verarbeitung des textilen Materials sowie die Maschine 10 ist in Fig. 2 mit weiteren Einzelheiten veranschaulicht.

Ferner ist in Fig. 1 gezeigt, dass zur automatisierten Produktionsvorbereitung und Produktionsinitiierung der jeweiligen textilen Produktion 210 mit der dafür variierten Produktionsvorgabe 230 die Verfahrensschritte 101, 102, 103 und 104 vorgesehen sind. Gemäß einem ersten Verfahrensschritt 101 wird eine Durchführung von wenigstens einem oder mehreren Produktionsexperimenten 215 initiiert. Dabei kann bei dem jeweiligen Produktionsexperiment 215 der mindestens eine Produktionsschritt 220 mit einer Einstellung 240 konfiguriert und basierend auf der Produktionsvorgabe 230 durchgeführt werden. Anschließend wird gemäß einem zweiten Verfahrensschritt 102 eine Auswirkung 250 der auf der Einstellung 240 basierenden Konfiguration bei dem jeweiligen Produktionsexperiment 215 ermittelt. Gemäß einem dritten Verfahrensschritt 103 erfolgt ein Anpassen der Einstellung 240 auf Basis der ermittelten Auswirkung 250, um eine auf die Produktionsvorgabe 230 optimierte Einstellung 240 zu bestimmen. Ferner ist durch einen gestrichelten Pfeil gezeigt, dass die Verfahrensschritte 101 bis 103 iterativ durchgeführt werden können. Dies bedeutet, dass nach der Durchführung eines ersten der Produktionsexperimente 215 zunächst die Auswirkung 250 ermittelt werden kann, um darauf basierend die Einstellung 240 anzupassen. Diese angepasste Einstellung 240 kann dann für eine Durchführung eines zweiten der Produktionsexperimente 215 genutzt werden. Es kann wieder die Auswirkung 250 ermittelt werden, um darauf basierend die Einstellung 240 erneut anzupassen und für eine dritte der Produktionsexperimente 215 zu verwenden, um hierbei den mindestens einen Produktionsschritt 220 zu konfigurieren. Dieses Vorgehen kann optional für weitere Produktionsexperimente 215 wiederholt werden. Die mehreren Produktionsexperimente 215 werden somit nacheinander durchgeführt, zwischen den Produktionsexperimenten 215 wird das Ermitteln 102 der Auswirkung 250 und das Anpassen 103 der Einstellung 240 durchgeführt, wobei für ein letztes der Produktionsexperimente 215 der Produktionsvorbereitung der jeweiligen Produktion 210 das Ermitteln 102 der Auswirkung 250 und anschließend das Anpassen 103 der Einstellung 240 auf Basis der ermittelten Auswirkung 250 abschließend durchgeführt wird, um die hierbei angepasste Einstellung 240 als die optimierte Einstellung 240 zu verwenden.

Mit der letzten Iteration des Schritts 103 ist die Produktionsvorbereitung abgeschlossen und es kann die ermittelte optimierte Einstellung 240 für einen vierten Verfahrensschritt 104 bei der Initiierung der textilen Produktion 210 verwendet werden. Bei der textilen Produktion 210 wird ebenfalls der mindestens eine Produktionsschritt 220 basierend auf der Produktionsvorgabe 230 durchgeführt, allerdings konfiguriert mit der optimierten Einstellung 240.

Ferner ist veranschaulicht, dass wenigstens oder genau eine Methode des maschinellen Lernens 300 verwendet werden kann, um auf Basis der ermittelten Auswirkung 250 das Anpassen 103 durchzuführen. Vorzugsweise ist die Methode des maschinellen Lernens 300 als eine Kernel-Methode 300 ausgeführt.

In Fig. 2 ist das erfindungsgemäße Verfahren 100 am Beispiel einer konkreten Textilmaschine 10 veranschaulicht. Die Textilmaschine 10 kann als Teil eines Systems 1 vorgesehen sein, bei welchem auch eine Vorrichtung 20 zur Datenverarbeitung, ein Computerprogramm 30 sowie wenigstens eine Erfassungsvorrichtung 15 zum Ermitteln 102 der Auswirkung 250 durch eine Erfassung eines Erfassungsergebnisses an der Maschine 10 und/oder am textilen Material 2 und/oder in einer Umgebung der Maschine 10 und/oder an einem Produktionsergebnis 3 vorgesehen ist. Im konkreten Beispiel kann das textile Material 2 Fasern, also insbesondere einen Faserverbund, und das Produktionsergebnis 3 einen Faden umfassen. Dabei kann bei dem in Fig. 1 gezeigten jeweiligen Produktionsexperiment 215 und der jeweiligen Produktion 210 das textile Material 2 zur Herstellung des Produktionsergebnisses 3 verarbeitet werden, wobei das Produktionsergebnis 3 des jeweiligen Produktionsexperiments 215 zumindest teilweise oder vollständig einen Ausschuss bildet und sich dadurch von dem Produktionsergebnis 3 der jeweiligen Produktion 210 unterscheidet. Es kann sowohl bei den Produktionsexperimenten 215 als auch bei der Produktion 210 die gleiche in Fig. 2 gezeigte Maschine 10 verwendet werden, um die Optimierung unter den tatsächlich in der Produktion 210 vorliegenden Bedingungen durchzuführen. Ferner können die weiteren textilen Produktionen 210 die Verarbeitung mit der gleichen Maschine 10 durchführen, jedoch sich hinsichtlich der Produktionsvorgabe 230, vorzugsweise des Produktionsergebnisses 3 und/oder einer Anforderung an das Produktionsergebnis 3 und/oder einer Parametrisierung und/oder Rezeptur für das Produktionsergebnis 3 und/oder des textiles Materials 2 und/oder eines Parameters des textiles Materials 2, bevorzugt einer Faseranzahl und/oder Faserstärke, unterscheiden.

Es ist insbesondere vorgesehen, dass einer Methode des maschinellen Lernens 300, kurz als KI bezeichnet, zunächst eine initiale Einstellung 240 für die Produktion 210 übergeben wird. Mittels der KI können dann angepasste Einstellungen 240 an eine angeschlossene Spinn- oder Spulstelle übertragen werden und damit ein Faden 3 gesponnen und/oder aufgewickelt werden. Erfassungsvorrichtungen 15, also insbesondere Sensoren, können dann das Ergebnis dieser Produktionsexperimente 215, also z. B. den Faden 3, als die Auswirkung 250 erfassen und an die KI zurückleiten. Aus diesem Datensatz kann die KI eine neue Einstellung 240 ableiten und ein weiteres Produktionsexperiment 215 vornehmen. Über die Zeit würde die KI die Einstellwerte immer weiter verbessern. Ziele der KI können verschiedene Kriterien sein, wie z. B. Qualität des Garnes erhöhen, Reinigerschnitte minimieren, Stromeffizienz steigern oder eine Produktionsgeschwindigkeit erhöhen.

Es ist möglich, dass die Verfahrensschritte bzw. das Computerprogramm 30 zur Durchführung der Verfahrensschritte in Echtzeit ausgeführt sind. Damit kann eine vollautomatisierte Echtzeitanwendung der voranstehend beschriebenen KI bereitgestellt werden. Auf diese Weise kann - z. B. auf Seite des Benutzers - vor jeder Durchführung einer neuen Produktion 210 zunächst die KI genutzt werden, um mittels der KI die optimierte Einstellung 240 zu ermitteln. Dies bedeutet, dass die Einstellung 240 mit den zugehörigen Einstellwerten auf eine jeweilige, spezifische Produktion 210 beschränkt optimiert und nach Beendigung der Produktion 210 (also ggf. schon nach einigen Stunden) nicht mehr benötigt wird. Dementsprechend ist der zeitliche Trainingsaufwand für die KI eher kurz und es sind nur wenige Trainingsdaten aus den Produktionsexperimenten 215 verfügbar. Es wird somit ein Optimierungsprozess durch die KI bereitgestellt, welcher geeignet ist, in sehr kurzer Zeit anhand weniger Trainingsdaten für jede Produktionsvorbereitung die optimierte Einstellung 240 zu ermitteln. Wenn dies auf Benutzerseite geschieht, ist es ferner vorteilhaft, wenn die hierzu notwendigen Produktionsexperimente 215 möglichst automatisiert an der Maschine 10 durchgeführt werden. Ebenfalls ist es möglich, dass zur Ermittlung der Auswirkung 250 Proben automatisiert aus den Produktionsexperimenten 215 zu einem Laborgerät übertragen werden.

Zur Verwirklichung einer KI sind verschiedene Methoden bekannt, herkömmlicherweise auch der Einsatz von neuronalen Netzen. Aufgrund der begrenzten Verfügbarkeit von Trainingsdaten werden gemäß der Erfindung allerdings Kernel-Methoden bevorzugt. Als KI kann daher bspw. ein Gaußprozess eingesetzt werden. Im Gegensatz zu neuronalen Netzen bieten diese klassischen Modelle des maschinellen Lernens die Möglichkeit, auch mit wenigen Trainingsdaten eine Optimierung zuverlässig durchzuführen. Dies ermöglicht es, das Optimierungsverfahren auch beschränkt auf die kurzen Produktionsprozesse und auf Benutzerseite einzusetzen. Ebenfalls ist es möglich, dass im Rahmen der Erfindung auf die Verwendung eines neuronalen Netzes verzichtet wird, die wenigstens eine Methode des maschinellen Lernens 300 somit kein einziges neuronales Netz umfasst.

Die Vorrichtung 20 kann Teil einer oder mehrerer der wenigstens einen Maschine 10 zur textilen Produktion sein, um die Verfahrensschritte 101-104 auf Benutzerseite und initiiert durch den Benutzer durchführen zu können. Dabei kann es möglich sein, dass bei der Produktion 210 eine große Anzahl von Textilmaschinen 10 eingesetzt werden, bspw. zur Umwandlung von Natur- und Chemiefasern und deren Mischungen in Garne einer gewünschten Art, Menge und Qualität. Die gewünschte Art und/oder Menge und/oder Qualität und/oder Mischung kann dabei bspw. durch die Produktionsvorgabe 230 definiert sein und für unterschiedliche Produktionen 210 variieren. Es können verschiedene Arten von Textilmaschinen 10 für die Produktion vorgesehen sein, wie bspw. Spulmaschinen oder Spinnmaschinen. Hierzu zählen insbesondere Luftspinn- und Rotorspinnmaschinen, welche grundsätzlich aus dem Stand der Technik bekannt sind.

Ebenfalls ist es bekannt, dass bei Textilmaschinen 10 und bei dem verarbeiteten textilen Material 2 Messungen durchgeführt werden, um die Produktion zu überwachen. Hierzu kann wenigstens eine Erfassungsvorrichtung 15 eingesetzt werden, wie die in Fig. 2 dargestellten beiden Sensoren 15. Dabei zeigt Fig. 2 schematisch eine Spinnstelle 11 mit einem sich während des Spinnvorgangs ausgehend von einer Spinneinheit 21, bei der es sich bspw. um eine Luftspinn- oder Rotorspinneinheit handelt, bis zu einer Fadenaufspulvorrichtung 13 erstreckenden Faden 3. Ein der Spinneinheit 21 zugeführter Faserverbund 2 wird nach dem Durchlaufen eines hier nicht dargestellten Streckwerks im Falle einer Luftspinnmaschine oder einer Auflöseeinheit im Falle einer Rotorspinnmaschine innerhalb der Spinneinheit 21 mit einer Verdrehung versehen. Der Spinneinheit 21 nachgelagert - bezogen auf die Fadenlaufrichtung 22 - ist eine durch Abzugswalzen 19 visualisierte Abzugseinrichtung, die mit Hilfe des Abzugswalzenpaars 19 den aus der Spinneinheit 21 heraustretenden Faden 3 aus der Spinneinheit 21 abzieht und in Richtung 22 auf die Fadenaufspulvorrichtung 13 transportiert. Der Abzugseinrichtung nachgelagert ist wiederum ein Fadenspeicher mit einem Fadenspeicherrohr 17 (gestrichelte Linie), an dem im Bereich einer nicht dargestellten Fadeneintrittsöffnung ein erster und ein zweiter Fadensensor 15 angeordnet sind, wobei das Fadenspeicherrohr 17 derart platziert ist, dass die Fadensensoren 15 im Bereich des Fadenlaufs angeordnet sind. Die Fadensensoren 15 bilden somit eine Sensorik, mittels der der Fadenlauf erfasst werden kann. Auf diese Weise kann auch ein Fadenfehler und/oder ein Reißen des Fadens 3 als Erfassungsergebnis erkannt werden. Der im Fadenspeicherrohrinneren angeordnete schlaufenförmige Fadenabschnitt wird dabei durch eine ausgehend von der Fadeneintrittsöffnung in Richtung auf das Fadenspeicherrohrinnere gerichtete Saugluft erzeugt, die durch eine Unterdruckquelle 18 bereitgestellt wird, welche mit einem der Fadeneintrittsöffnung gegenüberliegenden Ende des Fadenspeicherrohres 17 verbunden ist. Über die Fadensensoren 15 wird somit erfasst, in welchem Umfang sich der schlaufenförmige Fadenabschnitt innerhalb des Fadenspeicherrohrinneren erstreckt. Im Falle eines Reißens des Fadens 3 oder eines durch den Fadensensor 15 erkannten Fadenfehlers erfolgt über die angeschlossene Steuerung eine Unterbrechung des Spinnvorgangs. Anschließend wird mittels einer Trennvorrichtung 16 ein definiertes freies, von der Fadenaufspulvorrichtung 13 kommendes Fadenende erzeugt, welches in einem nächsten Schritt über Rückführmittel 14 in die Spinneinheit 21 befördert wird. Hier wird das Fadenende angesponnen, d. h. es wird mit dem von der Spinneinheit 21 kommenden Faden 3 verbunden. Ferner ist in Fig. 2 ein Antrieb 12 dargestellt, welcher dazu dient, eine Festlegung der Aufspulgeschwindigkeit der Fadenaufspulvorrichtung 13 durchzuführen.

Um anhand des durch die Erfassungsvorrichtung 15 bereitgestellten Erfassungsergebnisses das Anpassen 103 durchzuführen, kann der wenigstens einen Methode des maschinellen Lernens 300 das wenigstens eine Erfassungsergebnis und/oder der wenigstens eine Einstellwert und/oder wenigstens eine Zielvorgabe als Eingabe übergeben werden, um durch eine Anwendung der Methode des maschinellen Lernens 300 als Ausgabe der Methode 300 wenigstens einen optimierten Einstellwert zu erhalten. Zur Anwendung der Methode des maschinellen Lernens 300 kann ein Datensatz aus dem Erfassungsergebnis vorbereitet und als Eingabe für die Methode 300 verwendet werden. Zur Vorbereitung des Datensatzes können bspw. zunächst initial wenigstens ein Einstellwert und die wenigstens eine Zielvorgabe in einer Datei hinterlegt werden. Vorzugsweise ist für jedes Erfassungsergebnis eine Zielvorgabe vordefiniert, welche angibt, auf welchen Wert oder mit welchem Ziel (z. B. Maximierung) des Erfassungsergebnisses der wenigstens eine initiale Einstellwert hin optimiert werden soll. Konkret kann dies z. B. eine Erhöhung der Energieeffizienz oder eine Erhöhung der Garnqualität oder eine Produktionsgeschwindigkeit oder eine Kombination daraus sein. Die Zielvorgabe für die Produktionsgeschwindigkeit definiert bspw. eine Zeitdauer oder eine Minimierung der Zeitdauer.

Nachfolgend wird die anschließende Anwendung der Methode 300 am Beispiel eines Gaußschen Prozessmodells - kurz Gaußprozess bezeichnet - für mehrere Einstellwerte und Erfassungsergebnisse beschrieben. Das Gaußsche Prozessmodell gehört wie auch lineare Regressionsmodelle, baumbasierte Modelle oder perzeptronbasierte Modelle zu den Methoden des maschinellen Lernens. Ein Vorteil ist dabei, dass es sich um ein maschinelles Lernmodell handelt, welches analytisch gelöst werden kann. Nachfolgend wird gezeigt, dass der Einsatz für die Optimierung von Einstellwerten für Textilmaschinen 10 in überraschender Weise die Produktion 210 verbessern kann.

Der Datensatz kann während der Produktionsvorbereitung stets die aktuellen Einstellwerte der (ggf. angepassten) Einstellung 240 sowie die davon abhängigen und wiederholt ermittelten Erfassungsergebnisse gemäß der Auswirkung 250 enthalten. Die Einstellwerte können somit als Zielwert $y_n$ definiert werden durch die Funktion $f(x_n)$, bei welcher $x_n$ die einzelnen Eingaben aus $x = [x_1, x_2, ... x_\varphi]^T$ sind, welche aus den Erfassungsergebnissen gebildet sein können, und $e_n$ unabhängiges Gaußsches Rauschen ist:

$$y_n = f(x_n) + e_n.$$

Ferner kann die bedingte Wahrscheinlichkeit, $y_n$ bei $f(x_n)$ zu beobachten, durch die Normalverteilung bestimmt sein:

$$p(y_n \mid f(x_n)) = N(y_n \mid f(x_n), \sigma),$$

wobei $\sigma$ die Standardabweichung von $e_n$ und $\sigma = \sigma I$ eine Diagonalmatrix der Größe $\varphi \times \varphi$ ist. Um Vorhersagen über $y$ treffen zu können, kann die marginale Wahrscheinlichkeitsverteilung $p(y)$ bestimmt werden. Diese Wahrscheinlichkeitsverteilung kann durch Marginalisierung der bedingten Verteilung $p(y|f(x))$ über die Verteilung $p(f(x))$ unter Verwendung des Integrals ermittelt werden:

$$p(y) = \int p(y|f(x)) - p(f(x)) \, df(x).$$

Die Verteilung $p(f(x))$ ist definiert als Gauß-Verteilung mit einem Mittelwert von 0 und einer Kovarianz-Kernelmatrix K der Größe $\varphi \times \varphi$:

$$p(f(x)) = N(f(x)|0, K).$$

mit

$$K[n, m] = k(x_n, x_m).$$

Daraus ergibt sich:

$$p(y) = N(y|0, C),$$

wobei jedes Element in C erhalten werden kann durch: $C[n, m] = k(x_n, x_m) + \sigma\delta_{nm}$.

Es können für K bzw. $k(x_n, x_m)$ verschiedene Kovarianz-Kernfunktionen wie ein konstanter Kernel oder ein quadratischer Exponentialkernel oder ein periodischer Kernel verwendet werden. Der quadratische exponentielle Kernel kann dabei aus Paaren von Stichproben $(x_n, x_m)$ in x berechnet werden:

$$k(x_n, x_m) = \exp\left(-||x_n - x_m||^2/2\right),$$

wobei die Stichproben zu Beginn aus den initial vorgesehenen Einstellwerten erhalten werden können.

Für die Optimierung der Einstellwerte kann es nun vorgesehen sein, dass anhand der vorhandenen $\varphi$ Eingaben x = $[x_1, x_2, ... x_\varphi]^T$ und bekannten Zielwerte s y = $[y_1, y_2, ... y_\varphi]^T$ die Werte von $y_{\varphi+1}$ vorhergesagt werden, der einer neuen Eingabe $x_{\varphi+1}$ entsprechen. Die neue Eingabe kann dabei den Zielvorgaben entsprechen. Um die Parameter von $p(y_{\varphi+1}|y)$ zu bestimmen, kann von der Verteilung p(y') ausgegangen werden, wobei y' = $[y_1, y_2, ... y_\varphi, y_{\varphi+1}]^T$ ein Vektor der Länge $\varphi$ + 1 ist. Somit ergibt sich p(y') = N(y'|0, C'), wobei die neue Kovarianzmatrix C' der Größe $\varphi + 1 \times \varphi + 1$ mit der Struktur C' = [[C, k],... [$k^T$, c]] ist, wobei C = K+σI die ursprüngliche $\varphi \times \varphi$-Kovarianzmatrix ist, k ein Vektor der Länge $\varphi$ ist, dessen Elemente gegeben sind durch: $k[n] = k(x_n, x_{\varphi+1})$, und c ein Skalar ist, der die Kovarianz von $x_{\varphi+1}$ mit sich selbst enthält: c = k($x_{\varphi+1}$, $x_{\varphi+1}$)+σ. Die anschließende Anpassung 103 der Einstellung 240 kann auf Basis der auf diese Weise vorhergesagten Werte ermöglicht werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

**Bezugszeichenliste**

| | | | |
|---|---|---|---|
| 1 | System | | |
| 2 | textiles Material, Faserverbund | 100 | Verfahren |
| 3 | Produktionsergebnis, Faden | 101 | erster Verfahrensschritt, Initiieren |
| | | 102 | zweiter Verfahrensschritt, Ermitteln |
| 10 | Maschine | 103 | dritter Verfahrensschritt, Anpassen |
| 11 | Arbeitsstelle, Spinnstelle | 104 | vierter Verfahrensschritt, Initiieren |
| 12 | Antrieb | | |
| 13 | Fadenaufspulvorrichtung | 210 | Produktion |
| 14 | Rückführmittel | 215 | Produktionsexperiment |
| 15 | Erfassungsvorrichtung, Fadensensor | 220 | Produktionsschritt |
| 16 | Trennvorrichtung | 230 | Produktionsvorgabe |
| 17 | Fadenspeicherrohr | | |
| 18 | Unterdruckquelle | 240 | Einstellung |
| 19 | Abzugswalze | 250 | Auswirkung |
| 20 | Vorrichtung | 300 | Methode des maschinellen Lernens, |
| 21 | Spinneinheit | | Kernel-Methode |
| 22 | Fadenlaufrichtung | t | Zeit |
| 30 | Computerprogramm | | |

**Patentansprüche**

**1.** Verfahren (100) zur computergestützten Anpassung einer Konfiguration für unterschiedliche textile Produktionen (210), bei welchen eine Produktionsvorgabe (230) für die unterschiedlichen Produktionen (210) variiert wird, und bei welchen jeweils in mindestens einem Produktionsschritt (220) basierend auf der Produktionsvorgabe (230) ein textiles Material (2) durch wenigstens eine Maschine (10) verarbeitet wird, umfassend die nachfolgenden Schritte zur automatisierten Produktionsvorbereitung und Produktionsinitiierung der jeweiligen textilen Produktion (210) mit der dafür variierten Produktionsvorgabe (230):

- Initiieren (101) einer Durchführung von wenigstens einem oder mehreren Produktionsexperimenten (215), wobei bei dem jeweiligen Produktionsexperiment (215) der mindestens eine Produktionsschritt (220) mit einer Einstellung (240) konfiguriert und basierend auf der Produktionsvorgabe (230) durchgeführt wird,
- Ermitteln (102) einer Auswirkung (250) der auf der Einstellung (240) basierenden Konfiguration bei dem jeweiligen Produktionsexperiment (215),
- Anpassen (103) der Einstellung (240) auf Basis der ermittelten Auswirkung (250), um eine auf die Produktionsvorgabe (230) optimierte Einstellung (240) zu bestimmen,
- Initiieren (104) einer Durchführung der textilen Produktion (210), bei welcher der mindestens eine Produktionsschritt (220) mit der optimierten Einstellung (240) konfiguriert und basierend auf der Produktionsvorgabe (230) durchgeführt wird,

wobei wenigstens eine Methode des maschinellen Lernens (300) verwendet wird, um auf Basis der ermittelten Auswirkung (250) das Anpassen (103) durchzuführen, wobei vorzugsweise die wenigstens eine Methode des maschinellen Lernens (300) als wenigstens eine Kernel-Methode (300) ausgeführt ist.

2. Verfahren (100) nach Anspruch 1,
   **dadurch gekennzeichnet,**
   **dass** die Einstellung (240) wenigstens einen oder mehrere Einstellwerte für die wenigstens eine Maschine (10) in der Form wenigstens einer Textilmaschine, vorzugsweise Spinn- und/oder Spulmaschine, umfasst, um die Verarbeitung des textilen Materials (2), vorzugsweise einer Verarbeitung von Fasern zu Garn und/oder eines Um- und/oder Aufspulens des Garns, in dem mindestens einen Produktionsschritt (220) zu steuern, wobei vorzugsweise der wenigstens eine oder die mehreren Einstellwerte zumindest einen der folgenden umfassen: eine Abzugsgeschwindigkeit, eine Rotationsgeschwindigkeit eines Rotors der Maschine, einen Unterdruck, eine Spannung des textilen Materials (2) und/oder eines Produktionsergebnisses (3) beim Aufwickeln, eine Art und/oder Auswahl des textilen Materials (2), eine Einstellung für einen Reiniger, insbesondere eines Grenzwertes für ein Schneiden des textilen Materials (2) durch den Reiniger.

3. Verfahren (100) nach einem der vorhergehenden Ansprüche,
   **dadurch gekennzeichnet,**
   **dass** das Ermitteln (102) der Auswirkung (250) als ein Empfangen wenigstens eines Erfassungsergebnisses von wenigstens einer Erfassungsvorrichtung (15) ausgeführt ist, wobei das Erfassungsergebnis aus einer Erfassung, insbesondere Messung und/oder Analyse, an der Maschine (10) und/oder am textilen Material (2) und/oder in einer Umgebung der Maschine (10) und/oder an einem Produktionsergebnis (3), vorzugsweise einem Garn, des jeweiligen Produktionsexperiments (215) resultiert, wobei vorzugsweise das wenigstens eine Erfassungsergebnis zumindest eines der folgenden umfasst: eine Rotationsgeschwindigkeit eines Rotors der Maschine (10), eine Leistungsaufnahme der Maschine (10), eine Qualität eines Schmiermittels, einen Durchmesser des textilen Materials (2), eine Faserdichte des textilen Materials (2), ein Ergebnis einer Laboranalyse des textilen Materials (2), Umgebungsparameter der Maschine (10), insbesondere hinsichtlich der klimatischen Bedingungen, eine Häufigkeit eines Reißens und/oder eines Fadenfehlers des textilen Materials (2) und/oder Produktionsergebnisses (3), insbesondere Fadens.

4. Verfahren (100) nach einem der vorhergehenden Ansprüche,
   **dadurch gekennzeichnet,**
   **dass** die mehreren Produktionsexperimente (215) nacheinander durchgeführt werden, wobei für wenigstens eines der Produktionsexperimente (215) das Ermitteln (102) der Auswirkung (250) und anschließend das Anpassen (103) der Einstellung (240) auf Basis der ermittelten Auswirkung (250) durchgeführt wird, um bei einem jeweils nachfolgenden der Produktionsexperimente (215) die Konfiguration mit der hierbei angepassten Einstellung vorzunehmen.

5. Verfahren (100) nach einem der vorhergehenden Ansprüche,
   **dadurch gekennzeichnet,**
   **dass** die mehreren Produktionsexperimente (215) nacheinander durchgeführt werden, wobei bei den Produktionsexperimenten (215) jeweils die Einstellung (240) durch das Anpassen (103) variiert und die dabei ermittelte Auswirkung (250) als Eingabe für die Methode des maschinellen Lernens (300) verwendet wird, um die Einstellung (240) produktionsspezifisch zu optimieren, vorzugsweise anhand wenigstens einer Zielvorgabe, wobei die wenigstens eine Zielvorgabe bevorzugt wenigstens eine der folgenden umfasst: eine Energieeffizienz, vorzugsweise einer Unterdruck- und/oder Überdruckgenerierung bei der Maschine, eine Qualität des Produktionsergebnisses (3), insbesondere Garns, eine Produktionsgeschwindigkeit.

6. Verfahren (100) nach einem der vorhergehenden Ansprüche,
**dadurch gekennzeichnet,**
**dass** die mehreren Produktionsexperimente (215) nacheinander durchgeführt werden, wobei für ein letztes der Produktionsexperimente (215) der Produktionsvorbereitung der jeweiligen Produktion (210) das Ermitteln (102) der Auswirkung (250) und anschließend das Anpassen (103) der Einstellung (240) auf Basis der ermittelten Auswirkung (250) durchgeführt wird, um die hierbei angepasste Einstellung (240) als die optimierte Einstellung (240) zu verwenden.

7. Verfahren (100) nach einem der vorhergehenden Ansprüche,
**dadurch gekennzeichnet,**
**dass** bei dem jeweiligen Produktionsexperiment (215) und der jeweiligen Produktion (210) das textile Material (2) zur Herstellung eines Produktionsergebnisses (3), insbesondere eines Garns, verarbeitet wird, wobei das Produktionsergebnis (3) des jeweiligen Produktionsexperiments (215) zumindest teilweise oder vollständig einen Ausschuss bildet und sich dadurch von dem Produktionsergebnis (3) der jeweiligen Produktion (210) unterscheidet.

8. Verfahren (100) nach einem der vorhergehenden Ansprüche,
**dadurch gekennzeichnet,**
**dass** die textilen Produktionen (210) die Verarbeitung mit der gleichen wenigstens einen Maschine (10) durchführen, jedoch sich hinsichtlich der Produktionsvorgabe (230), vorzugsweise eines Produktionsergebnisses (3) und/oder einer Anforderung an das Produktionsergebnis (3) und/oder einer Parametrisierung und/oder Rezeptur für das Produktionsergebnis (3) und/oder des textiles Materials (2) und/oder eines Parameters des textiles Materials (2), bevorzugt einer Faseranzahl und/oder Faserstärke, unterscheiden, wobei jeweils für die Durchführung eines ersten der Produktionsexperimente (215) der Produktionsvorbereitung der jeweiligen Produktion (210) als die Einstellung (240) eine vordefinierte, initiale Einstellung (240) verwendet wird, welche erst nach der Durchführung des ersten Produktionsexperiments (215) variiert wird, wobei bevorzugt die jeweils bestimmte optimierte Einstellung (240) der weiteren Produktionen (210) unberücksichtigt bleibt.

9. Verfahren (100) nach einem der vorhergehenden Ansprüche,
**dadurch gekennzeichnet,**

**dass** die wenigstens oder genau eine Methode des maschinellen Lernens (300) als eine Kernel-Methode (300) ausgeführt ist, und bevorzugt die Kernel-Methode (300) als eine der nachfolgenden ausgeführt ist: Support Vector Machine, Gaußprozess, Kernel-PCA, Kernel-Perzeptron, kanonische Korrelationsanalyse, Ridge-Regression, spektrale Clusterbildung, lineare adaptive Filter, und/oder
**dass** ein produktionsspezifischer Anteil von Trainingsdaten für das Training der wenigstens einen Methode des maschinellen Lernens (300) vorgesehen ist, welcher ausschließlich aus dem wenigstens einen oder mehreren Produktionsexperimenten (215) der Produktionsvorbereitung der jeweiligen Produktion (210) bestimmt wird, wobei vorzugsweise die Trainingsdaten für die Produktionen (210) gleich definierte initiale Trainingsdaten, insbesondere eine vordefinierte, initiale Einstellung (240), und zusätzlich auf Basis der ermittelten Auswirkung (250) variierende Trainingsdaten umfasst.

10. Verfahren (100) nach einem der vorhergehenden Ansprüche,
**dadurch gekennzeichnet,**
**dass** die wenigstens oder genau eine Methode des maschinellen Lernens (300) als ein Gaußprozess ausgeführt ist.

11. Verfahren (100) nach einem der vorhergehenden Ansprüche,
**dadurch gekennzeichnet,**
**dass** die Schritte zur automatisierten Produktionsvorbereitung und Produktionsinitiierung vollautomatisiert durchgeführt werden und/oder das Verfahren (100) zumindest teilweise oder vollständig computerimplementiert ist und vorzugsweise in Echtzeit ausgeführt wird.

**12.** Verfahren (100) nach einem der vorhergehenden Ansprüche,
**dadurch gekennzeichnet,**
**dass** bei dem jeweiligen Produktionsexperiment (215) der mindestens eine Produktionsschritt (220) in der Form von mindestens oder genau einem Spinnversuch durchgeführt wird, bei welchem basierend auf der Einstellung (240) ein Faden gesponnen wird, um basierend auf dem Produktionsexperiment (215) durch das Anpassen (103) die Einstellung für die jeweilige Produktion (210) zu optimieren.

**13.** Vorrichtung (20) zur Datenverarbeitung, umfassend Mittel zur Ausführung der Schritte des Verfahrens (100) nach einem der vorhergehenden Ansprüche.

**14.** System (1) zur Durchführung von textilen Produktionen (210), umfassend:

- wenigstens eine Maschine (10) zur Verarbeitung eines textilen Materials (2) in mindestens einem Produktionsschritt (220),
- die Vorrichtung (20) zur Datenverarbeitung nach Anspruch 13,
- wenigstens eine Erfassungsvorrichtung (15) zum Ermitteln (102) der Auswirkung (250) durch eine Erfassung wenigstens eines Erfassungsergebnisses an der Maschine (10) und/oder am textilen Material (2) und/oder in einer Umgebung der Maschine (10) und/oder an einem Produktionsergebnis (3).

**15.** Computerprogramm (30), umfassend Befehle, die bei der Ausführung des Computerprogramms (30) durch einen Computer diesen veranlassen, die Schritte zur automatisierten Produktionsvorbereitung und Produktionsinitiierung des Verfahrens (100) nach einem der Ansprüche 1 bis 12 auszuführen.

**Claims**

**1.** A method (100) for computer-assisted adjustment of a configuration for different textile productions (210) with which a production specification (230) is varied for the different productions (210) and with which, in each case in at least one production step (220) based on the production specification (230), a textile material (2) is processed by at least one machine (10), comprising the following steps for automated production preparation and production initiation of the respective textile production (210) with the production specification (230) varied for this purpose:

- Initiating (101) a performance of at least one or more production experiments (215), wherein with the respective production experiment (215) the at least one production step (220) is configured with a setting (240) and is performed based on the production specification (230),
- Determining (102) an effect (250) of the configuration based on the setting (240) in the particular production experiment (215),
- Adjusting (103) the setting (240) on the basis of the determined effect (250), in order to determine a setting (240) optimized to the production specification (230),
- Initiating (104) a performance of textile production (210) with which the at least one production step (220) is configured with the optimized setting (240) and is performed based on the production specification (230),

wherein at least one machine learning method (300) is used to perform the adjustment (103) on the basis of the determined effect (250), wherein preferably the at least one machine learning method (300) is executed as at least one kernel method (300).

**2.** Method (100) according to claim 1,
**characterized in that**
the setting (240) comprises at least one or more setting values for the at least one machine (10) in the form of at least one textile machine, preferably a spinning and/or winding machine, in order to control the processing of the textile material (2), preferably a processing of fibers into yarn and/or a rewinding and/or winding of the yarn, in the at least one production step (220), wherein preferably the at least one or more setting values comprise at least one of the following: a take-off speed, a rotational speed of a rotor of the machine, a negative pressure, a tension of the textile material (2) and/or a production result (3) during winding, a type and/or selection of the textile material (2), a setting for a clearer, in particular a limit value for a cutting of the textile material (2) by the clearer.

**3.** The method (100) according to any one of the preceding claims,
**characterized in that**

the determination (102) of the effect (250) is performed as receiving at least one detection result from at least one detection apparatus (15), wherein the detection result results from a detection, in particular measurement and/or analysis, on the machine (10) and/or on the textile material (2) and/or in an environment of the machine (10) and/or on a production result (3), preferably a yarn, of the respective production experiment (215), wherein preferably the at least one detection result comprises at least one of the following: a rotational speed of a rotor of the machine (10), a power consumption of the machine (10), a quality of a lubricant, a diameter of the textile material (2), a fiber density of the textile material (2), a result of a laboratory analysis of the textile material (2), environmental parameters of the machine (10), in particular with respect to climatic conditions, a frequency of a breakage and/or a thread defect of the textile material (2) and/or production result (3), in particular thread.

4. The method (100) according to any one of the preceding claims,
**characterized in that**
the plurality of production experiments (215) are performed sequentially, wherein, for at least one of the production experiments (215), the determination (102) of the effect (250) and subsequently the adjustment (103) of the setting (240) is performed on the basis of the determined effect (250) in order to perform the configuration with the setting adjusted thereby upon a respective subsequent experiment of the production experiments (215).

5. The method (100) according to any one of the preceding claims,
**characterized in that**
the plurality of production experiments (215) are performed sequentially, wherein, in each of the production experiments (215), the setting (240) is varied by the adjustment (103) and the effect (250) determined thereby is used as input for the machine learning method (300) in order to optimize the setting (240) in a production-specific manner, preferably based on at least one target specification, wherein the at least one target specification preferably comprises at least one of the following: an energy efficiency, preferably a negative pressure and/or positive pressure generation at the machine, a quality of the production result (3), in particular yarn, a production speed.

6. The method (100) according to any one of the preceding claims,
**characterized in that**
the plurality of production experiments (215) are performed sequentially, wherein, for a last experiment of the production experiments (215) of the production preparation of the respective production (210), the determination (102) of the effect (250) and subsequently the adjustment (103) of the setting (240) is performed on the basis of the determined effect (250) in order to use the setting (240) adjusted thereby as the optimized setting (240).

7. The method (100) according to any one of the preceding claims,
**characterized in that**
with the respective production experiment (215) and the respective production (210) the textile material (2) is processed to produce a production result (3), in particular a yarn, wherein the production result (3) of the respective production experiment (215) at least partially or completely forms a reject and thus differs from the production result (3) of the respective production (210).

8. The method (100) according to any one of the preceding claims,
**characterized in that**
the textile productions (210) perform the processing with the same at least one machine (10), but differ with respect to the production specification (230), preferably a production result (3) and/or a requirement for the production result (3) and/or a parameterization and/or recipe for the production result (3) and/or the textile material (2) and/or a parameter of the textile material (2), preferably a fiber count and/or fiber strength, wherein a predefined, initial setting (240) is used as the setting (240), in each case for the carrying out of a first experiment of the production experiments (215) of the production preparation of the respective production (210), which is only varied after the carrying out of the first production experiment (215), wherein preferably the respectively determined optimized setting (240) of the further productions (210) is not taken into account.

9. The method (100) according to any one of the preceding claims,
**characterized in that**

the at least or exactly one machine learning method (300) is executed as a kernel method (300), and preferably the kernel method (300) is executed as one of the following: support vector machine, Gaussian process, kernel PCA, kernel perceptron, canonical correlation analysis, ridge regression, spectral clustering, linear adaptive filters, and/or

that a production-specific portion of training data is provided for the training of the at least one machine learning method (300), which is determined exclusively from the at least one or more production experiments (215) of the production preparation of the respective production (210), wherein preferably the training data for the productions (210) comprises equally defined initial training data, in particular a predefined, initial setting (240), and additionally training data varying on the basis of the determined effect (250).

10. The method (100) according to any one of the preceding claims,
**characterized in that**
the at least or exactly one machine learning method (300) is executed as a Gaussian process.

11. The method (100) according to any one of the preceding claims,
**characterized in that**
the steps for automated production preparation and production initiation are performed fully automatically and/or the method (100) is at least partially or completely computer-implemented and is preferably executed in real time.

12. The method (100) according to any one of the preceding claims,
**characterized in that**
with the respective production experiment (215) the at least one production step (220) is performed in the form of at least or exactly one spinning test with which a thread is spun based on the setting (240) in order to optimize the setting for the respective production (210) based on the production experiment (215) by adjusting (103) it.

13. An apparatus (20) for data processing comprising means for executing the steps of the method (100) of any one of the preceding claims.

14. A system (1) for carrying out textile productions (210), comprising:

- at least one machine (10) for processing a textile material (2) in at least one production step (220),
- the apparatus (20) for data processing according to claim 13,
- at least one detection apparatus (15) for determining (102) the effect (250) by detecting at least one detection result on the machine (10) and/or on the textile material (2) and/or in an environment of the machine (10) and/or on a production result (3).

15. A computer program (30) comprising instructions that, when the computer program (30) is executed by a computer, cause the computer to execute the steps for automated production preparation and production initiation of the method (100) according to any one of the claims 1 to 12.

**Revendications**

1. Procédé (100) d'adaptation assistée par ordinateur d'une configuration pour différentes productions textiles (210), dans lequel une consigne de production (230) pour les différentes productions (210) est variée, et dans lequel, dans chaque cas, dans au moins une étape de production (220) sur la base de la consigne de production (230), un matériau textile (2) est traité par au moins une machine (10), comprenant les étapes suivantes pour la préparation automatisée de la production et l'initiation de la production de la production textile (210) respective avec la consigne de production (230) variée à cet effet :

- initiation (101) de la réalisation d'au moins une ou plusieurs expériences de production (215), dans lequel, lors de l'expérience de production (215) respective, l'au moins une étape de production (220) est configurée avec un réglage (240) et est réalisée sur la base de la consigne de production (230),
- détermination (102) d'un effet (250) de la configuration basée sur le réglage (240) lors de l'expérience de production (215) respective,
- adaptation (103) du réglage (240) sur la base de l'effet déterminé (250) afin de déterminer un réglage (240) optimisé pour la consigne de production (230),
- initiation (104) de la réalisation de la production textile (210), dans laquelle l'au moins une étape de production (220) est configurée avec le réglage optimisé (240) et est réalisée sur la base de la consigne de production (230), dans lequel au moins une méthode d'apprentissage automatique (300) est utilisée pour effectuer l'adaptation (103) sur la base de l'effet déterminé (250), la au moins une méthode d'apprentissage automatique (300) étant de préférence mise en œuvre en tant qu'au moins une méthode à noyau (300).

**2.** Procédé (100) selon la revendication 1,
**caractérisé en ce que** le réglage (240) comprend au moins une ou plusieurs valeurs de réglage pour l'au moins une machine (10) sous la forme d'au moins une machine textile, de préférence une machine à filer et/ou à bobiner, pour commander le traitement du matériau textile (2), de préférence un traitement de fibres en fil et/ou un enroulement et/ou un bobinage du fil, dans l'au moins une étape de production (220), dans lequel de préférence la au moins une ou les plusieurs valeurs de réglage comprennent au moins l'un des éléments suivants : une vitesse de prélèvement, une vitesse de rotation d'un rotor de la machine, une dépression, une tension du matériau textile (2) et/ou d'un produit de production (3) lors du bobinage, un type et/ou une sélection du matériau textile (2), un réglage pour un nettoyeur, en particulier une valeur limite pour une coupe du matériau textile (2) par le nettoyeur.

**3.** Procédé (100) selon l'une des revendications précédentes,
**caractérisé en ce que**
la détermination (102) de l'effet (250) est exécutée comme une réception d'au moins un résultat de détection d'au moins un dispositif de détection (15), le résultat de détection résultant d'une détection, en particulier une mesure et/ou une analyse, sur la machine (10) et/ou sur le matériau textile (2) et/ou dans un environnement de la machine (10) et/ou sur un produit de production (3), de préférence un fil, de l'expérience de production (215) respective, dans lequel de préférence le au moins un résultat de détection comprend au moins l'un des éléments suivants : une vitesse de rotation d'un rotor de la machine (10), une consommation d'énergie de la machine (10), une qualité d'un lubrifiant, un diamètre du matériau textile (2), une densité de fibres du matériau textile (2), un résultat d'une analyse en laboratoire du matériau textile (2), des paramètres environnementaux de la machine (10), en particulier concernant les conditions climatiques, une fréquence d'une rupture et/ou d'un défaut de fil du matériau textile (2) et/ou du produit de production (3), en particulier du fil.

**4.** Procédé (100) selon l'une des revendications précédentes,
**caractérisé en ce que**
les multiples expériences de production (215) sont réalisées successivement, dans lequel pour au moins l'une des expériences de production (215), la détermination (102) de l'effet (250) et ensuite l'adaptation (103) du réglage (240) sur la base de l'effet déterminé (250) sont effectuées, afin de prendre en compte la configuration avec le réglage ainsi adapté pour une expérience de production (215) suivante respective.

**5.** Procédé (100) selon l'une des revendications précédentes,
**caractérisé en ce que**
les multiples expériences de production (215) sont réalisées successivement, dans lequel lors des expériences de production (215), le réglage (240) est à chaque fois varié par l'adaptation (103) et l'effet (250) ainsi déterminé est utilisé comme entrée pour la méthode d'apprentissage automatique (300) afin d'optimiser le réglage (240) de manière spécifique à la production, de préférence sur la base d'au moins un objectif cible, dans lequel l'au moins un objectif cible comprend de préférence au moins l'un des éléments suivants : une efficacité énergétique, de préférence d'une génération de dépression et/ou de surpression sur la machine, une qualité du produit de production (3), en particulier du fil, une vitesse de production.

**6.** Procédé (100) selon l'une des revendications précédentes,
**caractérisé en ce que**
les multiples expériences de production (215) sont réalisées successivement, dans lequel pour une dernière des expériences de production (215) de la préparation de production de la production (210) respective, la détermination (102) de l'effet (250) et ensuite l'adaptation (103) du réglage (240) sur la base de l'effet déterminé (250) sont effectuées, afin d'utiliser le réglage ainsi adapté comme réglage optimisé (240).

**7.** Procédé (100) selon l'une des revendications précédentes,
**caractérisé en ce que,**
lors de l'expérience de production (215) respective et de la production (210) respective, le matériau textile (2) est traité pour la fabrication d'un produit de production (3), en particulier d'un fil, dans lequel le produit de production (3) de l'expérience de production (215) respective forme au moins partiellement ou entièrement un déchet et se distingue ainsi du produit de production (3) de la production (210) respective.

**8.** Procédé (100) selon l'une des revendications précédentes,
**caractérisé en ce que**

les productions textiles (210) effectuent le traitement avec la même au moins une machine (10), mais se différencient en ce qui concerne la consigne de production (230), de préférence un produit de production (3) et/ou une exigence sur le produit de production (3) et/ou un paramétrage et/ou une recette pour le produit de production (3) et/ou le matériau textile (2) et/ou un paramètre du matériau textile (2), de préférence un nombre de fibres et/ou une résistance de fibre, dans lequel, à chaque fois pour la réalisation d'une première des expériences de production (215) de la préparation de production de la
production (210) respective, un réglage initial prédéfini (240) est utilisé comme réglage (240), lequel n'est varié qu'après la réalisation de la première expérience de production (215), dans lequel, de préférence, le réglage optimisé (240) déterminé à chaque fois pour les autres productions (210) n'est pas pris en compte.

9. Procédé (100) selon l'une des revendications précédentes,
**caractérisé en ce que**
la au moins une ou exactement une méthode d'apprentissage automatique (300) est mise en œuvre en tant que méthode à noyau (300), et de préférence la méthode à noyau (300) est mise en œuvre comme l'une des suivantes : Support Vector Machine, processus gaussien, Kernel-PCA, perceptron à noyau, analyse de corrélation canonique, régression Ridge, clustering spectral, filtres adaptatifs linéaires, et/ou **en ce qu'**une part spécifique à la production de données d'entraînement est prévue pour l'entraînement de l'au moins une méthode d'apprentissage automatique (300), laquelle est déterminée exclusivement à partir de l'au moins une ou des plusieurs expériences de production (215) de la préparation de production de la production (210) respective, dans lequel, de préférence, les données d'entraînement pour les productions (210) comprennent des données d'entraînement initiales définies de manière identique, en particulier un réglage initial prédéfini (240), et en plus des données d'entraînement variant sur la base de l'effet déterminé (250).

10. Procédé (100) selon l'une des revendications précédentes,
**caractérisé en ce que**
la au moins une ou exactement une méthode d'apprentissage automatique (300) est mise en œuvre en tant que processus gaussien.

11. Procédé (100) selon l'une des revendications précédentes,
**caractérisé en ce que**
les étapes de préparation automatisée de la production et d'initiation de la production sont entièrement automatisées et/ou le procédé (100) est au moins partiellement ou entièrement mis en œuvre par ordinateur et est de préférence exécuté en temps réel.

12. Procédé (100) selon l'une des revendications précédentes,
**caractérisé en ce que,**
lors de l'expérience de production (215) respective, l'au moins une étape de production (220) est réalisée sous la forme d'au moins ou exactement un essai de filage, lors duquel, sur la base du réglage (240), un fil est filé, afin d'optimiser le réglage pour la production (210) respective sur la base de l'expérience de production (215) par l'adaptation (103).

13. Dispositif (20) de traitement de données, comprenant des moyens pour la mise en œuvre des étapes du procédé (100) selon l'une des revendications précédentes.

14. Système (1) pour la réalisation de productions textiles (210), comprenant :

    - au moins une machine (10) pour le traitement d'un matériau textile (2) dans au moins une étape de production (220),
    - le dispositif (20) de traitement de données selon la revendication 13,
    - au moins un dispositif de détection (15) pour la détermination (102) de l'effet (250) par une détection d'au moins un résultat de détection sur la machine (10) et/ou sur le matériau textile (2) et/ou dans un environnement de la machine (10) et/ou sur un produit de production (3).

15. Programme d'ordinateur (30), comprenant des instructions qui, lors de l'exécution du programme d'ordinateur (30) par un ordinateur, amènent celui-ci à exécuter les étapes de préparation automatisée de la production et d'initiation de la production du procédé (100) selon l'une des revendications 1 à 12.

100

101

102

103

104

250

300

240

215

215

215

210

210

210

230    230    230    t

210, 215

220 | 220 | 220 | 220

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006014475 A1
- WO 2020100092 A1
- EP 3760772 A1
- IT 201900009465 A1